# EUROPEAN PATENT APPLICATION

(11) **EP 4 693 474 A1**
(43) Date of publication of application: **11.02.2026**
(21) Application number: 24892710.5
(22) Date of filing: 15.05.2024
(51) Int. Cl.: H01M 4/36, H01M 4/525, H01M 10/0525

(54) **POSITIVE ELECTRODE ACTIVE MATERIAL AND PREPARATION METHOD THEREFOR, SECONDARY BATTERY, AND ELECTRIC DEVICE**

(30) Priority: 20.11.2023 CN 202311548622
(71) Applicant: Contemporary Amperex Technology Co., Limited, Ningde, Fujian 352100 (CN)
(72) Inventor: WU, Kai, Ningde, Fujian 352100 (CN); YUN, Liang, Ningde, Fujian 352100 (CN); SUN, Xin, Ningde, Fujian 352100 (CN); WU, Lili, Ningde, Fujian 352100 (CN); LI, Xuan, Ningde, Fujian 352100 (CN)
(74) Representative: Lorenz Seidler Gossel Part. mbB
(86) International application number: PCT/CN2024/093422
(87) International publication number: WO 2025/107545

(57) **Abstract**

A positive electrode active material, a preparation method thereof, a secondary battery, and an electric apparatus are provided. The positive electrode active material includes a matrix and a coating layer at least partially covering the matrix. The positive electrode active material satisfies: W1 > W2, where W1 is a mass content of Co element in the coating layer, and W2 is a mass content of Co element in the matrix, both based on a mass of the positive electrode active material. The positive electrode active material has a high discharge specific capacity, providing a material foundation for the preparation of high-energy-density batteries.

## Description

### CROSS-REFERENCE TO RELATED APPLICATIONS

This application claims priority to Chinese Patent Application No. 202311548622.3, filed on November 20, 2023 and entitled "Positive Electrode Active Material, Preparation Method Thereof, Secondary Battery, and Electric Apparatus," which is incorporated herein by reference in its entirety.

### TECHNICAL FIELD

The present application relates to the field of secondary battery technologies, and more particularly, to a positive electrode active material, a preparation method thereof, a secondary battery, and an electric apparatus.

### BACKGROUND

In recent years, with the increasingly wide application range of secondary batteries, secondary batteries have been widely used in energy storage power systems such as hydropower, thermal power, wind power, and solar power plants, as well as in various fields including power tools, electric bicycles, electric motorcycles, electric vehicles, military equipment, and aerospace. Due to the significant development of secondary batteries, higher requirements have been placed on their energy density. The positive electrode active material is an important component of secondary batteries, affecting not only battery safety and cost but also serving as a key factor that directly determines battery electrochemical performance. To obtain secondary batteries with high energy density, certain strategies are needed to optimize the positive electrode active material and enhance its discharge specific capacity.

### SUMMARY

The present application is made in view of the above issues, with the purpose of providing a positive electrode active material that has a high discharge specific capacity, providing a material foundation for the preparation of high-energy-density batteries.

To achieve the above purpose, a first aspect of the present application provides a positive electrode active material including a matrix and a coating layer at least partially covering the matrix, the positive electrode active material satisfying: W1 > W2, where W1 is a mass content of Co element in the coating layer, and W2 is a mass content of Co element in the matrix, based on a mass of the positive electrode active material.

The coating layer on the surface of the matrix is a Co-rich layer, and the Co-rich doping in the coating layer can enhance the conductivity of active ions, reduce the charge transfer impedance at the material interface, improve the capacity plateau of the positive electrode active material in the low-voltage range, and increase the discharge specific capacity of the positive electrode active material, while the Co-rich coating layer on the matrix surface can also reduce residual lithium impurities on the material surface, improving its cycling stability. In addition, the matrix is a Co-poor region, with a low mass content of Co element in the matrix, providing a larger mass content for the Ni element, which supplies the electrons required for electrochemical reactions in the matrix. This makes it possible for the positive electrode active material to be a high-nickel material, effectively enhancing the discharge specific capacity and cycling performance of the positive electrode active material.

In summary, controlling the coating layer to be a Co-rich layer and the matrix to be a Co-poor region can increase the discharge specific capacity of the positive electrode active material, providing a material foundation for the preparation of high-energy-density batteries, while also effectively improving the cycling performance of the battery and extending its service life.

In any embodiment, based on the mass of the positive electrode active material, the mass content W1 of Co element in the coating layer is 0.4% to 1.6%, optionally 0.9% to 1.4%.

The mass content of Co element in the coating layer being within an appropriate range enables the Co element to uniformly and tightly coat the matrix of the positive electrode active material, effectively improving the structural performance of the material while reducing the likelihood of excessive coating leading to island-like accumulation, minimizing the impact of island-like accumulations on material performance. This results in a positive electrode active material with a high discharge specific capacity, high cycling stability, and a battery with a high number of cycles, comprehensively improving battery performance.

In any embodiment, based on the mass of the positive electrode active material, the mass content W2 of Co element in the matrix is less than or equal to 0.02%, optionally 0%.

The Co element in the matrix being within an appropriate range allows for a higher mass content of the Ni element, which provides the electrons required for electrochemical reactions in the matrix, enabling the positive electrode active material to have a high discharge specific capacity and the battery to exhibit excellent cycling performance.

In any embodiment, the matrix further includes a doping element M, where the M element includes one or more selected from Ba, W, Nb, Bi, Mg, Na, Sn, Y, and Sb, optionally one or more selected from Ba, Y, and Sb.

The inclusion of doping elements such as Ba, W, Nb, Bi, Mg, Na, Sn, Y, or Sb in the matrix can reduce the tendency for lithium-nickel mixing in the positive electrode active material, improving the cycling stability of the material and extending the cycle life of the battery.

In any embodiment, based on the mass of the positive electrode active material, a mass content of the M element is 200 ppm to 800 ppm.

Controlling the mass content of the doping element M within an appropriate range can achieve the purpose of reducing the tendency for lithium-nickel mixing in the positive electrode active material, while also minimizing the negative impact of excessive amounts of the doping element M on the high mass content of the Ni element in the matrix, which could affect the discharge specific capacity of the positive electrode active material.

In any embodiment, the matrix includes lithium nickelate.

In any embodiment, the coating layer further includes a doping element N, where the N element includes one or both of B and Al; optionally, based on the mass of the positive electrode active material, the mass content of the N element is 200 ppm to 700 ppm.

Al and B can form glass-like substances such as LiAlO₂ or Li₃BO₃ with the matrix of the positive electrode active material. These glass-like substances can encapsulate the grain boundaries of the particles, suppressing the generation of oxygen defects, improving the cycling performance of the battery, and reducing gas production in the battery. In addition, these glass-like substances have excellent ionic conductivity, which can enhance the transport rate of lithium ions on the material surface, reduce the direct current internal resistance of the battery, and improve the kinetic performance of the battery.

In any embodiment, a thickness of the coating layer is 0.5 nm to 4 nm, optionally 1 nm to 2 nm.

The thickness of the coating layer being within an appropriate range allows the formation of an effective protective layer on the matrix of the positive electrode active material while facilitating rapid lithium-ion transport on the material surface, improving the ionic conductivity of the material. This results in a battery with low direct current internal resistance and excellent discharge capacity, first-cycle Coulombic efficiency, storage performance, and cycling performance.

A second aspect of the present application provides a preparation method of a positive electrode active material, including:
mixing a first raw material including a lithium source and a precursor substance uniformly, and performing a first sintering to obtain a first product;
mixing a second raw material including the first product and a Co element additive uniformly, and performing a second sintering to obtain the positive electrode active material;
where the positive electrode active material includes a matrix and a coating layer located on the surface of the matrix, the positive electrode active material satisfying: W1 > W2, where W1 is a mass content of Co element in the coating layer, and W2 is a mass content of Co element in the matrix, based on the mass of the positive electrode active material.

Using the above preparation method, a positive electrode active material with a Co-rich coating layer and a Co-poor matrix can be obtained, where the positive electrode active material has a high discharge specific capacity, providing a material foundation for the preparation of high-energy-density batteries.

In any embodiment, the Co element additive includes at least one of cobalt tetroxide, cobalt hydroxide, cobaltous oxide, cobalt oxyhydroxide, cobalt acetate, cobalt oxalate, and cobalt carbonate.

In any embodiment, the second sintering is performed at a sintering temperature of 250°C to 350°C, optionally 250°C to 300°C; and/or, the second sintering is performed for a sintering time of 5 h to 10 h, optionally 5 h to 6 h.

Controlling the sintering temperature and/or sintering time of the second sintering within an appropriate range can reduce the likelihood of excessive Co element entering the matrix of the positive electrode active material during the second sintering, minimizing the possibility of forming a positive electrode active material with a Co-poor coating layer and a Co-rich matrix. This ensures that the resulting positive electrode active material has a Co-rich coating layer and a Co-poor matrix structure.

In any embodiment, the first raw material further includes an M source, optionally, the M source includes one or more selected from a Ba source, a W source, an Nb source, a Bi source, an Mg source, a Na source, a Sn source, a Y source, and an Sb source, optionally one or more selected from a Ba source, a Y source, and an Sb source.

In any embodiment, the second raw material further includes an N source, optionally, the N source includes one or both of a B source and an Al source.

A third aspect of the present application provides a secondary battery including a positive electrode plate, where the positive electrode plate includes the positive electrode active material of the first aspect or a positive electrode active material prepared by the preparation method of the second aspect.

A fourth aspect of the present application provides an electric apparatus including the secondary battery of the third aspect of the present application.

### BRIEF DESCRIPTION OF DRAWINGS

FIG. 1 is a schematic diagram of a secondary battery according to an embodiment of the present application;
FIG. 2 is an exploded view of the secondary battery according to the embodiment of the present application shown in FIG. 1;
FIG. 3 is a schematic diagram of a battery module according to an embodiment of the present application;
FIG. 4 is a schematic diagram of a battery pack according to an embodiment of the present application;
FIG. 5 is an exploded view of the battery pack according to the embodiment of the present application shown in FIG. 4; and
FIG. 6 is a schematic diagram of an electric apparatus using a secondary battery as a power source according to an embodiment of the present application.

### Description of Reference Signs:

1. battery pack; 2. upper case; 3. lower case; 4. battery module; 5. secondary battery; 51. casing; 52. electrode assembly; 53. top cover assembly.

### DESCRIPTION OF EMBODIMENTS

Hereinafter, embodiments specifically disclosing the positive electrode active material, the preparation method thereof, the secondary battery, and the electric apparatus of the present application will be described in detail with appropriate reference to the drawings. However, unnecessary detailed descriptions may be omitted. For example, detailed descriptions of well-known matters or repetitive descriptions of substantially identical structures may be omitted. This is to avoid unnecessarily lengthy descriptions and facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined in the form of lower and upper limits, where a given range is defined by selecting a lower limit and an upper limit, and the selected lower and upper limits define the boundaries of the particular range. Ranges defined in this manner may include or exclude endpoints and may be arbitrarily combined, that is, any lower limit may be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In the present application, unless otherwise stated, the numerical range "a-b" represents an abbreviated representation of any combination of real numbers between a and b, where both a and b are real numbers. For example, the numerical range "0-5" indicates that all real numbers between "0-5" have been listed herein, and "0-5" is merely an abbreviated representation of these numerical combinations. Additionally, when a parameter is expressed as an integer ≥ 2, it is equivalent to disclosing that the parameter is, for example, an integer of 2, 3, 4, 5, 6, 7, 8, 9, 10, 11, 12, and so on.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, preferably sequentially. For example, the method including steps (a) and (b) indicates that the method may include steps (a) and (b) performed sequentially, or steps (b) and (a) performed sequentially. For example, mentioning that the method may further include step (c) indicates that step (c) may be added to the method in any order, for example, the method may include steps (a), (b), and (c), or steps (a), (c), and (b), or steps (c), (a), and (b), or the like.

Unless otherwise specified, the terms "include" and "comprise" mentioned in the present application indicate an open-ended or closed-ended form. For example, "include" and "comprise" may indicate that other components not listed may also be included or comprised, or only the listed components may be included or comprised.

Unless otherwise specified, in the present application, the term "or" is inclusive. For example, the phrase "A or B" means "A, B, or both A and B. " More specifically, any of the following conditions satisfy the condition "A or B": A is true (or present) and B is false (or absent); A is false (or absent) and B is true (or present); or both A and B are true (or present).

Secondary batteries have advantages such as high voltage, light weight, long cycle life, no memory effect, and good safety, and have been widely applied. Secondary batteries include a positive electrode plate, a negative electrode plate, a separator, and an electrolyte. Among them, the positive electrode active material in the positive electrode plate is a key factor in determining the overall performance of the secondary battery. With the continuous development of technology in the application fields of secondary batteries, the requirements for the energy density of secondary batteries are increasing, which in turn increases the requirements for the discharge specific capacity of positive electrode active materials.

### [Positive Electrode Active Material]

The present application provides a positive electrode active material including a matrix and a coating layer at least partially covering the matrix, the positive electrode active material satisfying: W1 > W2, where W1 is a mass content of Co element in the coating layer, and W2 is a mass content of Co element in the matrix, based on the mass of the positive electrode active material.

The mass content of Co element in the coating layer and the matrix can be measured using a method and a device known in the art, for example, using EDS to measure the mass content of Co element in the coating layer and the matrix, specifically as follows: A sample preparation adhesive was mixed with a positive electrode active material powder uniformly (the powder weight being five times that of the adhesive), and a resulting mixture was applied onto a copper foil to obtain a sample; the sample is dried at 60°C for 30 minutes; the prepared sample is cut into 6 mm × 6 mm pieces with scissors; one of the cut pieces is fixed on the sample stage, placed in an ion polisher (model: IB-19500CP), and adjusted so that an edge of the cut piece is parallel to the centerline X-axis, with the Y-axis position at 40-60 µm; then milling is carried out; and after milling, an X-Max energy dispersive spectrometer (EDS) from Oxford Instruments, UK, combined with a Sigma-02-33 scanning electron microscope (SEM) from ZEISS, Germany, is used to select an appropriate particle cross-section on the cut sample, and a linear scan is performed along the diameter direction of the particle for the characteristic element Co in the coating layer and the characteristic element Co in the matrix to obtain the mass content of Co element in the matrix and the coating layer.

The coating layer on the surface of the matrix is a Co-rich layer, and the Co-rich doping in the coating layer can enhance the conductivity of active ions, reduce the charge transfer impedance at the material interface, improve the capacity plateau of the positive electrode active material in the low-voltage range (voltage range below 3.7 V), and increase the discharge specific capacity of the positive electrode active material, while the Co-rich coating layer on the matrix surface can also reduce residual lithium impurities on the material surface, improving its cycling stability. In addition, the matrix is a Co-poor region, with a low mass content of Co element in the matrix, providing a larger mass content for the Ni element, which supplies the electrons required for electrochemical reactions in the matrix. This makes it possible for the positive electrode active material to be a high-nickel material, effectively enhancing the discharge specific capacity of the positive electrode active material.

In summary, controlling the coating layer to be a Co-rich layer and the matrix to be a Co-poor region can increase the discharge specific capacity of the positive electrode active material, providing a material foundation for the preparation of high-energy-density batteries, while also improving the cycling stability of the positive electrode active material and enhancing the cycling performance of the battery.

In some embodiments, based on the mass of the positive electrode active material, the mass content W1 of Co element in the coating layer is 0.4% to 1.6%. In some embodiments, based on the mass of the positive electrode active material, the mass content W1 of Co element in the coating layer may be optionally 0.4%, 0.6%, 0.8%, 1.0%, 1.2%, 1.4%, 1.6%, or a value within a range defined by any two of the foregoing values.

The mass content of Co element in the coating layer being within an appropriate range allows the Co element to uniformly and tightly coat the matrix of the positive electrode active material, effectively improving the structural performance of the material. It also reduces the likelihood of excessive coating amounts forming island-like accumulations, minimizing the impact of island-like accumulations on material performance. This results in a positive electrode active material with a high discharge specific capacity, high cycling stability, and a battery with a high number of cycles, comprehensively improving battery performance.

In some embodiments, based on the mass of the positive electrode active material, the mass content W1 of Co element in the coating layer is 0.9% to 1.4%. In some embodiments, based on the mass of the positive electrode active material, the mass content W1 of Co element in the coating layer may be optionally 0.9%, 1.0%, 1.1%, 1.2%, 1.3%, 1.4%, or a value within a range defined by any two of the foregoing values.

Controlling the mass content of Co element in the coating layer within an appropriate range can further increase the discharge specific capacity of the positive electrode active material and the number of cycles of the battery.

In some embodiments, based on the mass of the positive electrode active material, the mass content W2 of Co element in the matrix is less than or equal to 0.02%. In some embodiments, based on the mass of the positive electrode active material, the mass content W2 of Co element in the matrix may be optionally any one of less than or equal to 0.02% or less than or equal to 0.01%.

The Co element in the matrix being within an appropriate range allows for a higher mass content of the Ni element, which provides the electrons required for electrochemical reactions in the matrix, enabling the positive electrode active material to have a high discharge specific capacity and the battery to exhibit excellent cycling performance.

In some embodiments, based on the mass of the positive electrode active material, the mass content W2 of Co element in the matrix is 0%.

The mass content of Co element in the matrix being 0%, that is, the matrix containing no Co element, can further increase the discharge specific capacity of the positive electrode active material and the number of cycles of the battery.

In some embodiments, the matrix further includes a doping element M, where the M element includes one or more selected from Ba, W, Nb, Bi, Mg, Na, Sn, Y, and Sb.

The inclusion of doping elements such as Ba, W, Nb, Bi, Mg, Na, Sn, Y, or Sb in the matrix can reduce the tendency for lithium-nickel mixing in the positive electrode active material, improving the cycling stability of the material and extending the cycle life of the battery.

In some embodiments, the doping element M includes one or more selected from Ba, Y, and Sb.

When doped into the matrix, Ba, Y, or Sb can form strong chemical bonds with oxygen atoms in the matrix, further suppressing the tendency for lithium-nickel mixing in the positive electrode active material, enhancing the structural stability of the material, and further improving the cycling performance of the battery.

In some embodiments, based on the mass of the positive electrode active material, a mass content of the M element is 200 ppm to 800 ppm. In some embodiments, based on the mass of the positive electrode active material, the mass content of the M element may be optionally 200 ppm, 400 ppm, 600 ppm, 800 ppm, or a value within a range defined by any two of the foregoing values.

The mass content of the doping element M in the matrix can be measured using a method and a device known in the art, for example, using EDS to measure the mass content of a doping element in the matrix, specifically as follows: A sample preparation adhesive is mixed with a positive electrode active material powder uniformly (the powder weight being five times that of the adhesive), and a resulting mixture is applied onto a copper foil to obtain a sample; the sample is dried at 60°C for 30 minutes; the prepared sample is cut into 6 mm × 6 mm pieces with scissors; one of the cut pieces is fixed on the sample stage, placed in an ion polisher (model: IB-19500CP), and adjusted so that an edge of the cut piece is parallel to the centerline X-axis, with the Y-axis position at 40-60 µm; then milling is carried out; and after milling, an X-Max energy dispersive spectrometer (EDS) from Oxford Instruments, UK, combined with a Sigma-02-33 scanning electron microscope (SEM) from ZEISS, Germany, is used to select an appropriate particle cross-section on the cut sample, and a linear scan is performed along the diameter direction of the particle for the characteristic doping element M in the matrix to obtain the mass content of the doping element M in the matrix.

Controlling the mass content of the doping element M within an appropriate range can achieve the purpose of reducing the tendency for lithium-nickel mixing in the positive electrode active material, while also minimizing the negative impact of excessive amounts of the doping element M on the high mass content of the Ni element in the matrix, which could affect the discharge specific capacity of the positive electrode active material.

In some embodiments, the matrix includes lithium nickelate.

Lithium nickelate has a high theoretical specific capacity; however, lithium nickelate materials suffer from severe lithium-nickel mixing during charge and discharge, making it difficult to achieve their high-capacity characteristics.

To address this issue, the present application applies a Co element coating on the surface of the lithium nickelate matrix, reducing the impedance of the material and the diffusion impedance of ions, improving the capacity plateau in the low-voltage range (voltage range below 3.7 V), and increasing the discharge specific capacity of the positive electrode active material.

In some embodiments, the coating layer further includes a doping element N, where the N element includes one or both of B and Al.

Al and B can form glass-like substances such as LiAlO₂ or Li₃BO₃ with the matrix of the positive electrode active material. These glass-like substances can encapsulate the grain boundaries of the particles, suppressing the generation of oxygen defects, improving the cycling performance of the battery, and reducing gas production in the battery. In addition, these glass-like substances have excellent ionic conductivity, which can enhance the transport rate of lithium ions on the material surface, reduce the direct current internal resistance of the battery, and improve the kinetic performance of the battery.

In some embodiments, based on the mass of the positive electrode active material, the mass content of the N element is 200 ppm to 700 ppm. In some embodiments, based on the mass of the positive electrode active material, the mass content of the N element may be optionally 200 ppm, 400 ppm, 600 ppm, 700 ppm, or a value within a range defined by any two of the foregoing values.

The method for measuring the mass content of the doping element N in the coating layer can refer to the method for measuring the mass content of the doping element M in the matrix.

In some embodiments, the thickness of the coating layer is 0.5 nm to 4 nm. In some embodiments, the thickness of the coating layer may be optionally 0.5 nm, 1 nm, 2 nm, 3 nm, 4 nm, or a value within a range defined by any two of the foregoing values.

In some embodiments, the thickness of the coating layer is 1 nm to 2 nm. In some embodiments, the thickness of the coating layer may be optionally 1 nm, 1.5 nm, 2 nm, or a value within a range defined by any two of the foregoing values.

The thickness of the coating layer can be measured using a method and a device known in the art, for example, using an IB-19500CP ion polisher and a transmission electron microscope for measurement. The specific process is as follows: cleaning tools used for sample preparation, mixing a sample preparation adhesive (a gel formed by dispersing polyvinylidene fluoride in N-vinylpyrrolidone, with a polyvinylidene fluoride mass content of 8%) with a sample powder uniformly (the powder weight being approximately 5 times that of the adhesive), applying a resulting mixture onto copper foil, and drying the foil at 60°C for 30 minutes; cutting the prepared sample into 6 mm × 6 mm pieces with scissors, fixing one of the cut pieces on the sample stage, placing the piece in an ion polisher (model: IB-19500CP) for cutting, and placing the cut sample in a FEI Tecnai G2 transmission electron microscope from the USA for thickness measurement according to JBT9352-1999.

The thickness of the coating layer being within an appropriate range allows the formation of an effective protective layer on the matrix of the positive electrode active material while facilitating rapid lithium-ion transport on the material surface, improving the ionic conductivity of the material. This results in a battery with low direct current internal resistance and excellent discharge capacity, first-cycle Coulombic efficiency, storage performance, and cycling performance.

Some embodiments of the present application further provide a preparation method of a positive electrode active material, including:
mixing a first raw material including a lithium source and a precursor substance uniformly, and performing a first sintering to obtain a first product;
mixing a second raw material including the first product and a Co element additive uniformly, and performing a second sintering to obtain the positive electrode active material;
where the positive electrode active material includes a matrix and a coating layer located on the surface of the matrix, the positive electrode active material satisfying: W1 > W2, where W1 is the mass content of Co element in the coating layer, and W2 is the mass content of Co element in the matrix, based on the mass of the positive electrode active material.

Using the above preparation method, a positive electrode active material with a Co-rich coating layer and a Co-poor matrix can be obtained, where the positive electrode active material has a high discharge specific capacity, providing a material foundation for the preparation of high-energy-density batteries.

In some embodiments, the Co element additive includes at least one of cobalt tetroxide, cobalt hydroxide, cobaltous oxide, cobalt oxyhydroxide, cobalt acetate, cobalt oxalate, and cobalt carbonate.

In some embodiments, the precursor substance contains cobalt element.

When the precursor substance contains cobalt element, the cobalt element in the matrix of the positive electrode active material originates from the cobalt element in the precursor during the first sintering, or the cobalt element in the matrix of the positive electrode active material originates from the cobalt element in the precursor during the first sintering and the cobalt element in the Co element additive during the second sintering.

In some embodiments, the precursor substance contains no cobalt element.

When the precursor substance contains no cobalt element, the cobalt element in the matrix of the positive electrode active material originates from the cobalt element in the Co element additive during the second sintering.

In some embodiments, the precursor substance is Ni(OH)₂.

In some embodiments, the first raw material further includes an M source.

In some embodiments, the first raw material further includes one or more selected from a Ba source, a W source, an Nb source, a Bi source, an Mg source, a Na source, a Sn source, a Y source, and an Sb source. In some embodiments, the first raw material further includes one or more selected from a Ba source, a Y source, and an Sb source.

In some embodiments, the Ba source includes one or more selected from Barium sulfate, barium chloride, barium titanate, barium nitrate, and barium chloride.

In some embodiments, the W source includes one or more selected from tungsten trioxide, tungstic acid, ammonium tungstate, sodium tungstate, and lithium tungstate.

In some embodiments, the Nb source includes niobium oxide or lithium niobate.

In some embodiments, the Bi source includes one or more selected from bismuth subnitrate, bismuth subcarbonate, bismuth nitrate, bismuth sulfate, bismuth phosphate, bismuth vanadate, bismuth tungstate, bismuth germanate, bismuth citrate, bismuth acetate, and bismuth subsalicylate.

In some embodiments, the Mg source includes one or more selected from magnesium hydroxide, magnesium carbonate, magnesium oxide, magnesium chloride, and magnesium fluoride.

In some embodiments, the Na source includes one or more selected from sodium hydroxide, sodium carbonate, sodium chloride, sodium fluoride, and sodium oxide.

In some embodiments, the Sn source includes one or more selected from tin oxide, tin carbonate, tin chloride, tin nitrate, and tin sulfate.

In some embodiments, the Y source includes one or more selected from yttrium oxide, yttrium sulfate, yttrium nitrate, yttrium oxalate, yttrium acetate, and yttrium chloride.

In some embodiments, the Sb source includes antimony oxide or lithium antimonate.

In some embodiments, the second raw material further includes an N source, optionally, the N source includes one or both of a B source and an Al source.

In some embodiments, the Al source includes one or more selected from aluminum oxide, aluminum hydroxide, aluminum sulfate, aluminum chloride, and aluminum nitrate.

In some embodiments, the B source includes one or more selected from boron chloride, boron sulfate, boron nitrate, boron nitride, boron oxide, boron fluoride, boron bromide, boron iodide, and boric acid.

In some embodiments, the second sintering is performed at a sintering temperature of 250°C to 350°C.

In some embodiments, the sintering temperature of the second sintering may be optionally 250°C, 260°C, 270°C, 280°C, 290°C, 300°C, 310°C, 320°C, 330°C, 340°C, 350°C, or a value within a range defined by any two of the foregoing values.

In some embodiments, the sintering time of the second sintering may be optionally 5 h, 6 h, 7 h, 8 h, 9 h, 10 h, or a value within a range defined by any two of the foregoing values.

Controlling the sintering temperature or sintering time of the second sintering within an appropriate range can reduce the likelihood of excessive Co element entering the matrix of the positive electrode active material during the second sintering, minimizing the possibility of forming a positive electrode active material with a Co-poor coating layer and a Co-rich matrix. This ensures that the resulting positive electrode active material has a Co-rich coating layer and a Co-poor matrix structure.

In some embodiments, the second sintering is performed at a sintering temperature of 250°C to 300°C; and/or, the second sintering is performed for a sintering time of 5 h to 6 h.

In some embodiments, the sintering temperature of the second sintering may be optionally 250°C, 260°C, 270°C, 280°C, 290°C, 300°C, or a value within a range defined by any two of the foregoing values.

In some embodiments, the sintering time of the second sintering may be optionally 5 h, 5.5 h, 6 h, or a value within a range defined by any two of the foregoing values.

Controlling the sintering time or sintering temperature within an appropriate range substantially prevents the Co element additive from entering the matrix during the second sintering, ensuring as much as possible that the matrix is substantially free of cobalt element doping and contains sufficient nickel element, enabling the positive electrode active material to have a high discharge capacity.

### [Positive Electrode Plate]

The positive electrode plate includes a positive electrode current collector and a positive electrode film layer disposed on at least one surface of the positive electrode current collector, where the positive electrode film layer includes the positive electrode active material according to the first aspect of the present application.

In an example, the positive electrode current collector has two surfaces opposite in its thickness direction, and the positive electrode film layer is disposed on either or both of the two opposite surfaces of the positive electrode current collector.

In some embodiments, the positive electrode current collector may be a metal foil or a composite current collector. For example, as a metal foil, aluminum foil may be used. The composite current collector may include a polymer material base layer and a metal layer formed on at least one surface of the polymer material base layer. The composite current collector may be formed by forming a metal material (such as aluminum, aluminum alloy, nickel, nickel alloy, titanium, titanium alloy, silver, or silver alloy) on a polymer material matrix (such as a matrix of polypropylene (PP), polyethylene terephthalate (PET), polybutylene terephthalate (PBT), polystyrene (PS), or polyethylene (PE)).

In some embodiments, the positive electrode film layer may optionally further include a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer may optionally further include a conductive agent. In an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared as follows: The components for the preparation of a positive electrode plate, such as the positive electrode active material, conductive agent, binder, and any other components, are dispersed in a solvent (for example, N-methylpyrrolidone) to form a positive electrode slurry; and the positive electrode slurry is applied onto a positive electrode current collector and subjected to processes such as drying and cold pressing, to obtain a positive electrode plate.

### [Negative Electrode Plate]

The negative electrode plate includes a negative electrode current collector and a negative electrode film layer disposed on at least one surface of the negative electrode current collector, where the negative electrode film layer includes a negative electrode active material.

In an example, the negative electrode current collector has two surfaces opposite in its thickness direction, and the negative electrode film layer is disposed on either or both of the two opposite surfaces of the negative electrode current collector.

In some embodiments, the negative electrode current collector may be a metal foil or a composite current collector. For example, as a metal foil, copper foil may be used. The composite current collector may include a polymer material base layer and a metal layer formed on at least one surface of the polymer material base layer. The composite current collector may be formed by forming a metal material (such as copper, copper alloy, nickel, nickel alloy, titanium, titanium alloy, silver, or silver alloy) on a polymer material matrix (such as a matrix of polypropylene (PP), polyethylene terephthalate (PET), polybutylene terephthalate (PBT), polystyrene (PS), or polyethylene (PE)).

In some embodiments, the negative electrode active material may be a negative electrode active material well-known in the art for use in batteries. In an example, the negative electrode active material may include at least one of the following materials: artificial graphite, natural graphite, soft carbon, hard carbon, silicon-based materials, tin-based materials, and lithium titanate. The silicon-based material may be selected from at least one of elemental silicon, silicon-oxygen compounds, silicon-carbon composites, silicon-nitrogen composites, and silicon alloys. The tin-based material may be selected from at least one of elemental tin, tin-oxygen compounds, and tin alloys. However, the present application is not limited to these materials, and other conventional materials that can be used as negative electrode active materials for batteries may also be used. These negative electrode active materials may be used alone or in combination of two or more.

In some embodiments, the negative electrode film layer may optionally further include a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may optionally further include a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer may optionally further include other additives, such as a thickener (for example, sodium carboxymethyl cellulose (CMC-Na)).

In some embodiments, the negative electrode plate may be prepared as follows: The components for preparing the negative electrode plate, such as the negative electrode active material, conductive agent, binder, and any other components, are dispersed in a solvent (for example, deionized water) to form a negative electrode slurry; and the negative electrode slurry is applied onto a negative electrode current collector and subjected to processes such as drying and cold pressing to obtain a negative electrode plate.

### [Electrolyte]

The electrolyte serves to conduct ions between the positive electrode plate and the negative electrode plate. The present application imposes no specific limitation on the type of electrolyte, which may be selected according to needs. For example, the electrolyte may be in a liquid state, a gel state, or an all-solid state.

In some embodiments, the electrolyte is a liquid electrolyte. The liquid electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte may optionally further include additives. For example, the additives may include negative electrode film-forming additives, positive electrode film-forming additives, and additives that can improve certain battery performances, such as additives that improve battery overcharge performance and additives that improve battery high-temperature or low-temperature performance.

### [Separator]

In some embodiments, the secondary battery further includes a separator. The present application imposes no particular limitations on the type of separator, and any well-known porous structure separator with good chemical stability and mechanical stability can be used.

In some embodiments, the material of the separator may be selected from at least one of glass fiber, non-woven fabric, polyethylene, polypropylene, and polyvinylidene fluoride. The separator may be a single-layer film or a multilayer composite film, with no particular limitations. When the separator is a multilayer composite film, the materials of each layer may be the same or different, with no particular limitations.

In some embodiments, the positive electrode plate, negative electrode plate, and separator may be formed into an electrode assembly through a winding process or a lamination process.

In some embodiments, the secondary battery may include an outer package. The outer package may be used to encapsulate the electrode assembly and the electrolyte.

In some embodiments, the outer package of the secondary battery may be a hard casing, such as a hard plastic casing, an aluminum casing, or a steel casing. Alternatively, the outer package of the secondary battery may be a soft package, such as a pouch-type soft package. The material of the soft package may be plastic, examples of which include polypropylene, polybutylene terephthalate, and polybutylene succinate.

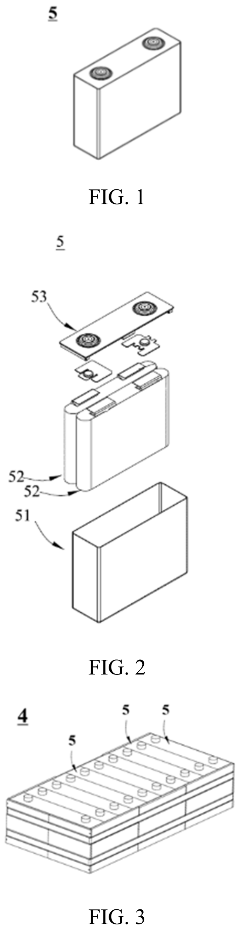

The present application imposes no particular limitations on the shape of the secondary battery, which may be cylindrical, square, or any other shape. For example, FIG. 1 shows a secondary battery 5 with a square structure as an example.

In some embodiments, referring to FIG. 2, the outer package may include a casing 51 and a cover plate 53. The casing 51 may include a bottom plate and side plates connected to the bottom plate, where the bottom plate and side plates enclose a accommodating cavity. The casing 51 has an opening communicating with the accommodating cavity, and the cover plate 53 can cover the opening to seal the accommodating cavity. The positive electrode plate, negative electrode plate, and separator may be formed into an electrode assembly 52 through a winding process or a lamination process. The electrode assembly 52 is encapsulated in the accommodating cavity. The electrolyte permeates the electrode assembly 52. The number of electrode assemblies 52 contained in the secondary battery 5 may be one or more, which can be selected by those skilled in the art according to specific actual needs.

In some embodiments, the secondary battery may be assembled into a battery module, where the number of secondary batteries contained in the battery module may be one or more, and the specific number can be selected by those skilled in the art according to the application and capacity of the battery module.

FIG. 3 shows a battery module 4 as an example. Referring to FIG. 3, in the battery module 4, a plurality of secondary batteries 5 may be sequentially arranged along the length direction of the battery module 4. Of course, they may also be arranged in any other manner. Further, the plurality of secondary batteries 5 may be fixed by fasteners.

Optionally, the battery module 4 may further include a housing with an accommodating space, in which the plurality of secondary batteries 5 are accommodated.

In some embodiments, the above battery module may alternatively be assembled into a battery pack, where the number of battery modules contained in the battery pack may be one or more, and the specific number can be selected by those skilled in the art according to the application and capacity of the battery pack.

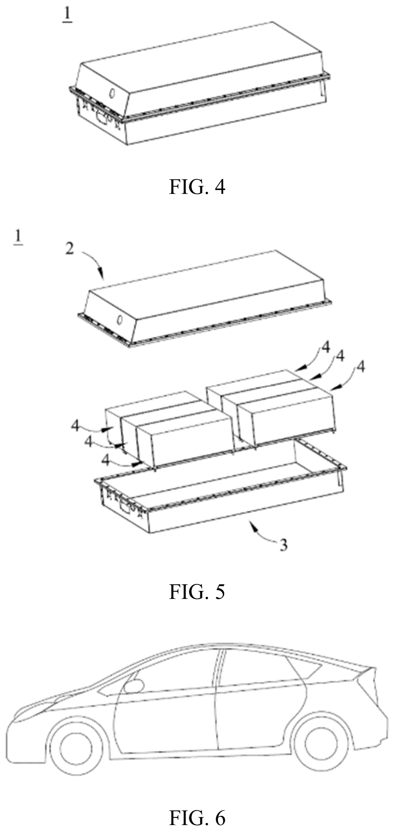

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper case 2 and a lower case 3, where the upper case 2 can cover the lower case 3 to form a sealed space for accommodating the battery modules 4. The plurality of battery modules 4 may be arranged in the battery box in any manner.

In addition, the present application further provides an electric apparatus including at least one of the secondary battery, battery module, or battery pack provided in the present application. The secondary battery, battery module, or battery pack may be used as a power source for the electric apparatus or as an energy storage unit for the electric apparatus. The electric apparatus may include mobile devices (for example, mobile phones, laptops), electric vehicles (for example, pure electric vehicles, hybrid electric vehicles, plug-in hybrid electric vehicles, electric bicycles, electric scooters, electric golf carts, electric trucks), electric trains, ships, satellites, energy storage systems, and the like, but is not limited thereto.

For the electric apparatus, the secondary battery, battery module, or battery pack may be selected according to its usage requirements.

FIG. 6 shows an electric apparatus as an example. The electric apparatus is a pure electric vehicle, a hybrid electric vehicle, a plug-in hybrid electric vehicle, or the like. To meet the high power and high energy density requirements of the electric apparatus for secondary batteries, a battery pack or battery module may be used.

In another example, the apparatus may be a mobile phone, tablet computer, laptop, or the like. Such an apparatus typically requires a thin and light design and may use a secondary battery as a power source.

### Examples

Hereinafter, examples of the present application are described. The examples described below are exemplary and are only used to explain the present application, and should not be construed as limiting the present application. For examples where specific techniques or conditions are not specified, they are carried out according to the techniques or conditions described in the literature in the art or according to product specifications. Reagents or instruments used without indicating the manufacturer are conventional products commercially available.

### I. Preparation method

### Example 1

(1) First sintering: Lithium hydroxide and precursor Ni(OH)₂ were mixed in a high-speed mixer, and a first mixed material was obtained, where a molar ratio of lithium hydroxide to the precursor Ni(OH)₂ was 1.03:1. In a pure oxygen atmosphere, the first mixed material was placed into a kiln and calcined for the first time at a calcination temperature of 685°C for a calcination time of 5 h, and a first product was obtained.
(2) The first product and coating additive Co(OH)₂ were mixed in a high-speed mixer, and a second mixture was obtained, where a mass content of the coating additive Co(OH)₂ was 1.2%, based on a total mass of Ni(OH)₂ and Co(OH)₂. In a high-purity oxygen atmosphere, the second mixture was placed into a kiln and calcined at a calcination temperature of 300°C for a calcination time of 6 h. The obtained material was subjected to mechanical pulverization, classification, demagnetization, sieving, and packaging, and a positive electrode active material was obtained.

### 2. Preparation of positive electrode plate

The positive electrode active material, conductive agent carbon black, and binder polyvinylidene fluoride (PVDF) were mixed at a mass ratio of 97%:1%:2% with N-methylpyrrolidone, and a positive electrode slurry was obtained after uniform mixing. The slurry was applied onto a positive electrode current collector, followed by drying, cold-pressing, and slitting, to obtain a positive electrode plate.

### 3. Preparation of negative electrode plate

Negative electrode active substances artificial graphite and hard carbon, conductive agent acetylene black, binder styrene-butadiene rubber (SBR), and thickener sodium carboxymethyl cellulose (CMC) were mixed at a mass ratio of 90%:5%:2%:2%:1% in a deionized water solvent system and thoroughly stirred to uniformity to obtain a resulting mixture. The resulting mixture was applied onto a copper foil, followed by drying and cold-pressing, to obtain a negative electrode plate.

### 4. Liquid electrolyte

In an argon atmosphere glove box (H₂O < 0.1 ppm and O₂ < 0.1 ppm), lithium salt lithium hexafluorophosphate LiPF₆ was dissolved in an organic solvent of ethylene carbonate/methyl ethyl carbonate/dimethyl carbonate (EC+EMC+DMC with a volume ratio of 1:1:1) and stirred uniformly, and a liquid electrolyte with a LiPF₆ concentration of 1 mol/L was obtained.

### 5. Separator

A polyethylene porous polymer film was used as the separator.

### 6. Preparation of coin cell

A standard coin cell was assembled using a lithium sheet as the negative electrode plate and the positive electrode plate of Example 1.

### 7. Preparation of secondary battery

The positive electrode plate, separator, and negative electrode plate of Example 1 were stacked in order, with the separator positioned between the positive and negative electrode plates for separation. The assembly was wound to obtain a cell. Tabs were welded to the cell, and the cell was placed into an aluminum casing. Electrolyte was subsequently injected into the casing, and then the casing was sealed. After processes such as standing, cold pressing, formation, shaping, and capacity testing, a lithium-ion secondary battery was obtained.

The preparation parameters in Examples 2 to 5 were substantially the same as those in Example 1, but the mass content of the coating additive was adjusted as follows:
Example 2: The mass content of the coating additive Co(OH)2 was 0.4%, based on the total mass of Ni(OH)2 and Co(OH)2;
Example 3: The mass content of the coating additive Co(OH)2 was 0.9%, based on the total mass of Ni(OH)2 and Co(OH)2;
Example 4: The mass content of the coating additive Co(OH)2 was 1.4%, based on the total mass of Ni(OH)2 and Co(OH)2;
Example 5: The mass content of the coating additive Co(OH)2 was 1.6%, based on the total mass of Ni(OH)2 and Co(OH)2;
the preparation parameters in Example 6 were substantially the same as those in Example 1, but the temperature during the second sintering was adjusted to 350°C; and
the preparation parameters in Example 7 were substantially the same as those in Example 1, but the preparation method of the positive electrode active material was adjusted as follows:
   First sintering: Lithium hydroxide, precursor Ni(OH)₂, and dopant barium titanate were mixed in a high-speed mixer, and a first mixed material was obtained, where a molar ratio of lithium hydroxide to the precursor Ni(OH)₂ was 1.03:1, and a mass content of the dopant barium titanate was 0.05%, based on a mass of Ni(OH)₂. In a pure oxygen atmosphere, the first mixed material was placed into a kiln and calcined for the first time at a calcination temperature of 685°C for a calcination time of 5 h, and a first product was obtained.

(2) The first product and coating additive Co(OH)₂ were mixed in a high-speed mixer, and a second mixture was obtained, where a mass content of the coating additive Co(OH)₂ was 1.2%, based on a total mass of Ni(OH)₂ and Co(OH)₂. In a high-purity oxygen atmosphere, the second mixture was placed into a kiln and calcined at a calcination temperature of 300°C for a calcination time of 6 h. The obtained material was subjected to mechanical pulverization, classification, demagnetization, sieving, and packaging, and a positive electrode active material was obtained.

### Example 8

The preparation parameters in Example 8 were substantially the same as those in Example 7, but the dopant barium titanate in the first sintering was replaced with tungsten trioxide.

### Examples 9 to 12

The preparation parameters in Examples 9 to 12 were substantially the same as those in Example 7, but the mass content of barium titanate was adjusted as follows:
Example 9: The mass content of the dopant barium titanate was 0.01%, based on the mass of Ni(OH)₂;
Example 10: The mass content of the dopant barium titanate was 0.02%, based on the mass of Ni(OH)₂;
Example 11: The mass content of the dopant barium titanate was 0.08%, based on the mass of Ni(OH)₂; and
Example 12: The mass content of the dopant barium titanate was 1%, based on the mass of Ni(OH)₂.

### Comparative Examples 1 and 2

The preparation parameters in Comparative Example 1 were substantially the same as those in Example 1, but the preparation method of the positive electrode active material was adjusted as follows:
first sintering: Lithium hydroxide and the precursor Ni(OH)₂ were mixed in a high-speed mixer, and a first mixed material was obtained, where the molar ratio of lithium hydroxide to the precursor Ni(OH)₂ was 1.03:1. In a pure oxygen atmosphere, the first mixed material was placed in a kiln and calcined for the first time at a calcination temperature of 685°C for a calcination time of 5 h, and a positive electrode active material was obtained.

The preparation parameters in Comparative Example 2 were substantially the same as those in Example 1, but the preparation method of the positive electrode active material was adjusted as follows:
first sintering: Lithium hydroxide, the precursor Ni(OH)₂, and the dopant Co(OH)₂ were mixed in a high-speed mixer, and a first mixed material was obtained, where a molar ratio of lithium hydroxide to the precursor Ni(OH)₂ was 1.03:1, and a mass content of the dopant Co(OH)₂ was 1.2%, based on a total mass of Ni(OH)₂ and Co(OH)₂. In a pure oxygen atmosphere, the first mixed material was placed into a kiln and calcined for the first time at a calcination temperature of 685°C for a calcination time of 5 h, and a positive electrode active material was obtained.

### II. Performance testing

### 1. Positive electrode active material testing

### (1) Determination of mass content of characteristic elements in matrix and coating layer of positive electrode active material

A sample preparation adhesive was mixed uniformly with the positive electrode active material powder (the powder weight being five times that of the adhesive), and a resulting mixture was applied onto a copper foil to obtain a sample. The sample was dried at 60°C for 30 minutes. The prepared sample was cut into 6 mm × 6 mm pieces with scissors. One of the cut pieces was fixed on the sample stage, placed in an ion polisher (model: IB-19500CP), and adjusted so that an edge of the cut piece was parallel to the centerline X-axis, with the Y-axis position at 40-60 µm. Then, Milling was carried out. After milling, an X-Max energy dispersive spectrometer (EDS) from Oxford Instruments, UK, combined with a Sigma-02-33 scanning electron microscope (SEM) from ZEISS, Germany, was used to select an appropriate particle cross-section on the cut sample, and a linear scan was performed along the diameter direction of the particle for the characteristic elements (Co element or N element) in the coating layer and the characteristic elements (Co element or M element) in the matrix to obtain the mass content of the characteristic element in the matrix and the coating layer.

### (2) Discharge specific capacity of positive electrode active material

At a voltage of 2.5 V to 4.4 V, the coin cells of the examples and comparative examples were charged at a constant current of 0.1C to 4.4 V, then charged at a constant voltage of 4.4 V until the current was ≤ 0.05 mA, and left standing for 2 minutes. The charge capacity at this point was recorded as C0. The cells were then discharged at a constant current of 0.1C to 2.5 V, and the discharge capacity was recorded as D0.

The ratio of the discharge capacity D0 to the mass of the positive electrode active material was calculated as the discharge specific capacity D1 of the positive electrode active material.

### 2. Battery performance

### (1) Cycling performance

The secondary batteries prepared in the examples and comparative examples were charged at a constant current rate of 0.5C to a charge cut-off voltage of 4.25 V, then charged at a constant voltage until the current was ≤ 0.05C, and left standing for 5 minutes. The batteries were then discharged at a constant current rate of 0.33C to a discharge cut-off voltage of 2 V and left standing for 5 minutes. This constituted one charge-discharge cycle. Cyclic charge-discharge testing was performed on the batteries according to this method until the battery capacity decayed to 80%. The number of cycles at this point was recorded as the cycle life of the battery at 25°C.

### III. Analysis of test results for examples and comparative examples

The batteries in the examples and comparative examples were prepared according to the above methods, and their various performance parameters were measured, with the results shown in Table 1 below.

**Table 1**

| No. | Positive electrode active material | | | | | Secondary battery | |
|---|---|---|---|---|---|---|---|
| | Matrix | Mass content W1 of Co element in coating layer | Mass content W2 of Co element in matrix | Doping element M | Mass content of doping M element (ppm) | Discharge specific capacity (mAh/g) | Number of cycles |
| Example 1 | LiNiO₂ | 1.20% | 0 | / | 0 | 247 | 936 |
| Example 2 | LiNiO₂ | 0.40% | 0 | / | 0 | 244 | 828 |
| Example 3 | LiNiO₂ | 0.90% | 0 | / | 0 | 246 | 926 |
| Example 4 | LiNiO₂ | 1.40% | 0 | / | 0 | 248 | 988 |
| Example 5 | LiNiO₂ | 1.60% | 0 | / | 0 | 245 | 889 |
| Example 6 | LiNiO₂ | 1.18% | 0.02% | / | 0 | 245 | 898 |
| Example 7 | LiNiO₂ | 1.20% | 0 | Ba | 500 | 258 | 1028 |
| Example 8 | LiNiO₂ | 1.20% | 0 | W | 500 | 257 | 986 |
| Example 9 | LiNiO₂ | 1.20% | 0 | Ba | 100 | 251 | 940 |
| Example 10 | LiNiO₂ | 1.20% | 0 | Ba | 200 | 253 | 971 |
| Example 11 | LiNiO₂ | 1.20% | 0 | Ba | 800 | 250 | 945 |
| Example 12 | LiNiO₂ | 1.20% | 0 | Ba | 1000 | 249 | 938 |
| Comparative Example 1 | LiNiO₂ | / | / | / | / | 233 | 632 |
| Comparative Example 2 | LiNiO₂ | / | 1.20% | / | / | 234 | 668 |

From the above results, it can be seen that the positive electrode active materials in Examples 1 to 12 include a lithium nickelate matrix and a coating layer at least partially covering the matrix, where based on the mass of the positive electrode active material, the mass content W1 of Co element in the coating layer is greater than the mass content of Co element in the matrix. The comparisons of Examples 1 to 12 with Comparative Examples 1 and 2 shows that, compared with no coating layer or a higher mass content of Co element in the matrix than in the coating layer, a lower mass content of Co element is contained in the matrix than that in the coating layer in the present application, which can increase the discharge specific capacity of the positive electrode active material, providing a material foundation for preparing high-energy batteries, while also increasing the number of battery cycles and extending the battery's service life.

From Examples 1 to 12, it can be seen that controlling the mass content W1 of Co element in the coating layer to be 0.4% to 1.6% results in a positive electrode active material with a high discharge specific capacity and high cycling stability, and a battery with a high number of cycles, comprehensively improving battery performance. From comparisons of Examples 1, 3, 4, and 6 with Examples 2 and 5, it can be seen that controlling the mass content W1 of Co element in the coating layer to be 0.9% to 1.4% can further increase the discharge specific capacity of the positive electrode active material and the number of battery cycles.

From Examples 1 to 12, it can be seen that when the mass content W2 of Co element in the matrix is less than or equal to 0.02%, the positive electrode active material has a high discharge specific capacity and high cycling stability, and the battery has a high number of cycles, comprehensively improving battery performance. Comparing Example 1 with Example 6, it can be seen that when the mass content W2 of Co element in the matrix is 0%, that is, the matrix contains no Co element, the discharge specific capacity of the positive electrode active material and the number of battery cycles can be further increased.

From comparisons of Examples 7 to 12 with Example 1, it can be seen that when the matrix of the positive electrode active material further contains Ba or W elements, the discharge specific capacity of the positive electrode active material and the number of battery cycles can be increased, improving the cycling performance of the battery. From the comparison of Example 7 with Example 8, it can be seen that when the matrix of the positive electrode active material includes Ba element, the number of battery cycles can be further increased, improving the cycling performance of the battery.

From comparisons of Examples 7, 10, and 11 with Examples 9 and 12, it can be seen that controlling the mass content of the M element to be 200 ppm to 800 ppm can further increase the number of battery cycles, while the positive electrode active material has a high discharge specific capacity.

It should be noted that the present application is not limited to the above embodiments. The above embodiments are merely examples, and embodiments having substantially the same structure and achieving the same effects as the technical ideas within the scope of the technical solutions of the present application are included in the technical scope of the present application. In addition, various modifications that can be conceived by those skilled in the art as well as other implementations constructed by combining some of the constituent elements of the embodiments, without departing from the spirit of the present application, are also included within the scope of the present application.

## Claims

1. A positive electrode active material, **characterized by** comprising: a matrix and a coating layer at least partially covering the matrix, the positive electrode active material satisfying: W1 > W2,
wherein W1 is a mass content of Co element in the coating layer, and W2 is a mass content of Co element in the matrix, based on a mass of the positive electrode active material.

2. The positive electrode active material according to claim 1, **characterized in that** based on the mass of the positive electrode active material, the mass content W1 of Co element in the coating layer is 0.4% to 1.6%, optionally 0.9% to 1.4%.

3. The positive electrode active material according to claim 1 or 2, **characterized in that** based on the mass of the positive electrode active material, the mass content W2 of Co element in the matrix is less than or equal to 0.02%, optionally 0%.

4. The positive electrode active material according to any one of claims 1 to 3, **characterized in that** the matrix further comprises a doping element M, wherein the M element comprises one or more selected from Ba, W, Nb, Bi, Mg, Na, Sn, Y, and Sb, optionally one or more selected from Ba, Y, and Sb.

5. The positive electrode active material according to claim 4, **characterized in that** based on the mass of the positive electrode active material, a mass content of the M element is 200 ppm to 800 ppm.

6. The positive electrode active material according to any one of claims 1 to 5, **characterized in that** the matrix comprises lithium nickelate.

7. The positive electrode active material according to any one of claims 1 to 6, **characterized in that** the coating layer further comprises a doping element N, wherein the N element comprises one or both of B and Al; optionally, based on the mass of the positive electrode active material, a mass content of the N element is 200 ppm to 700 ppm.

8. The positive electrode active material according to any one of claims 1 to 7, **characterized in that** a thickness of the coating layer is 0.5 nm to 4 nm, optionally 1 nm to 2 nm.

9. A preparation method of a positive electrode active material, **characterized by** comprising:
mixing a first raw material comprising a lithium source and a precursor substance uniformly, and performing a first sintering to obtain a first product;
mixing a second raw material comprising the first product and a Co element additive uniformly, and performing a second sintering to obtain the positive electrode active material;
wherein the positive electrode active material comprises a matrix and a coating layer located on a surface of the matrix, the positive electrode active material satisfying: W1 > W2,
wherein W1 is a mass content of Co element in the coating layer, and W2 is a mass content of Co element in the matrix, based on a mass of the positive electrode active material.

10. The preparation method according to claim 9, **characterized in that** the Co element additive comprises at least one of cobalt tetroxide, cobalt hydroxide, cobaltous oxide, cobalt oxyhydroxide, cobalt acetate, cobalt oxalate, and cobalt carbonate.

11. The preparation method according to claim 9 or 10, **characterized in that** a sintering temperature of the second sintering is 250°C to 350°C, optionally 250°C to 300°C; and/or, a sintering time of the second sintering is 5 h to 10 h, optionally 5 h to 6 h.

12. The preparation method according to any one of claims 9 to 11, **characterized in that** the first raw material further comprises an M source, optionally, the M source comprises one or more selected from a Ba source, a W source, an Nb source, a Bi source, an Mg source, a Na source, a Sn source, a Y source, and an Sb source, optionally one or more selected from a Ba source, a Y source, and an Sb source.

13. The preparation method according to any one of claims 9 to 12, **characterized in that** the second raw material further comprises an N source, optionally, the N source comprises one or both of a B source and an Al source.

14. A secondary battery comprising a positive electrode plate, **characterized in that** the positive electrode plate comprises the positive electrode active material according to any one of claims 1 to 8 or the positive electrode active material prepared by the preparation method according to any one of claims 9 to 13.

15. An electric apparatus, **characterized by** comprising the secondary battery according to claim 14.
